# EUROPEAN PATENT APPLICATION

(11) **EP 1 768 022 A2**
(43) Date of publication of application: **28.03.2007**
(21) Application number: 06119468.4
(22) Date of filing: 24.08.2006
(51) Int. Cl.: G06F 9/445

(54) **Electronic apparatus and control method thereof**

(30) Priority: 09.09.2005 KR 20050084218
(71) Applicant: Samsung Electronics Co., Ltd., Suwon-si, Gyeonggi-Do (KR)
(72) Inventor: KWON, Hyok-sang, , Gyeonggi-do (KR); KIM, Han-joon, , Seoul (KR)
(74) Representative: Perkins, Dawn Elizabeth

(57) **Abstract**

An electronic apparatus that includes a connection part which is connectable to an external storage apparatus, a connection detector that detects whether the storage apparatus is connected to the connection part, and a controller that executes a first application program stored in the external storage apparatus if the connection detector detects that the external storage apparatus is connected with the connection part at a booting stage.

## Description

Apparatuses, methods, and systems consistent with the present invention relate to connection of an external storage with an electronic apparatus, and control of the electronic apparatus.

Generally, a hard disk drive and a floppy disk drive are widely used for external storage in conjunction with an electronic apparatus such as a digital television (TV) or a digital video device (DVD). Recently, a memory stick, which is portable and has large data storage capacity, is also being used.

When a related art electronic apparatus, for example, a digital TV, stores an application program and data before being released to the market, it is difficult to update the application program and data or store other programs other than the prestored application program and data after the digital TV is released to the market. Accordingly, the related art electronic apparatus cannot execute an application program other than the application program which is stored before being released to the market. Further, should an updated application program be introduced, it may not execute properly on the TV.

Illustrative, non-limiting embodiments of the present invention overcome the above disadvantages and other disadvantages not described above. Also, the present invention is not required to overcome the disadvantages described above, and an illustrative, non-limiting embodiment of the present invention may not overcome any of the problems described above.

According to an aspect of the invention, there is provided an electronic apparatus, comprising: a connection part which is connectable to an external storage apparatus; a connection detector that detects whether the storage apparatus is connected to the connection part; and a controller that executes a first application program stored in the external storage apparatus if the connection detector detects that the external storage apparatus is connected with the connection part at a booting stage.

The controller may execute the first application program stored in the storage apparatus if the controller determines that the external storage apparatus is connected with the connection part based on a detection result of the connection detector at the booting stage.

The electronic apparatus may further comprise a program storage part, wherein the controller executes the first application program stored in the external storage apparatus after loading the first application program into the program storage part.

The controller may control an operating system (OS) stored in the external storage apparatus, and the OS is loaded if a connection of the storage apparatus is detected.

The OS stored in the storage apparatus may be loaded if the connection of the storage apparatus is detected at a loading stage of a boot loader.

The controller may control a root file system stored in the storage apparatus, and the root file system may be loaded if the connection of the storage apparatus is detected after the OS is loaded at the booting stage.

The electronic apparatus may further comprise an internal memory which stores a second application program, wherein the controller controls the first application program to be executed prior to the second application program if the first application program stored in the storage apparatus is executed.

The electronic apparatus may further comprise a display part; and an interface picture generator that generates a predetermined interface picture, wherein the controller controls the interface picture generator to display the predetermined interface picture, the predetermined interface picture comprising information on the connection of the storage apparatus, on the display part if the storage apparatus is connected with the connection part.

The electronic apparatus may further comprise a user selection part, wherein the controller determines whether to execute the first application program stored in the storage apparatus according to a selection signal of the user selection part if the storage apparatus is connected with the connection part.

The first application program may comprise a checking program, and the controller executes the checking program.

The checking program may store a checking result in the storage apparatus after performing a checking operation.

According to an aspect of the invention, there is provided an electronic apparatus system, comprising: an external storage apparatus that stores at least a first application program therein; and an electronic apparatus comprising a connection part to which the external storage apparatus is connected, a connection detector that detects whether the external storage apparatus is connected with the connection part, and a controller that executes the first application program stored in the external storage apparatus if the connection detector detects that the external storage apparatus is connected with the connection part at a booting stage.

The controller may execute the first application program stored in the storage apparatus if the controller determines that the external storage apparatus is connected with the connection part based on a detection result of the connection detector at the booting stage.

The electronic apparatus may further comprise a program storage part, and the controller may execute the first application program stored in the storage apparatus after loading the first application program into the program storage part.

The controller may control an operating system (OS) stored in the storage apparatus, and the OS may be loaded if a connection of the storage apparatus is detected.

The OS stored in the storage apparatus may be loaded if the connection of the storage apparatus is detected at a loading stage of a boot loader.

The controller may control a root file system stored in the storage apparatus, and the root file system may be loaded if the connection of the storage apparatus is detected after the OS is loaded at the booting stage.

The electronic apparatus system may further comprise an internal memory which stores a second application program therein, wherein the controller controls the first application program to be executed prior to the second application program when the first application program stored in the storage apparatus is executed.

According to an aspect of the invention, there is provided a method of controlling an electronic apparatus, comprising: detecting whether a storage apparatus is connected to the electronic apparatus; and executing a first application program stored in the storage apparatus if it is detected that the storage apparatus is connected to the electronic apparatus at a booting stage.

The executing the first application program may comprise loading the first application program stored in the storage apparatus; and executing the loaded first application program.

The executing the first application program may further comprise loading an operation system (OS) stored in the storage apparatus when a connection of the storage apparatus is detected.

The executing the first application program further comprises loading a root file system stored in the storage apparatus if the connection of the storage apparatus is detected after the OS is loaded at the booting stage.

The executing the first application program may further comprise executing the first application program prior to the second application program.

The method may further comprise displaying information on the connection of the storage apparatus when the storage apparatus is connected.

The executing the first application program may further comprise determining whether to execute the first application program stored in the storage apparatus according to a predetermined user selection signal if the storage apparatus is connected.

The above and other aspects of the present invention will become apparent and more readily appreciated from the following description of the exemplary embodiments, taken in conjunction with the accompanying drawings of which:
Figure 1 is a perspective view of an exemplary embodiment of an electronic apparatus system according to the present invention;
Figure 2 is a control block diagram of the electronic apparatus system according to the present invention; and
Figure 3 is a flowchart of an exemplary method of controlling the electronic apparatus according to the present invention.

Reference will now be made in detail to exemplary embodiments of the present invention, examples of which are illustrated in the accompanying drawings, wherein like reference numerals refer to like elements throughout.

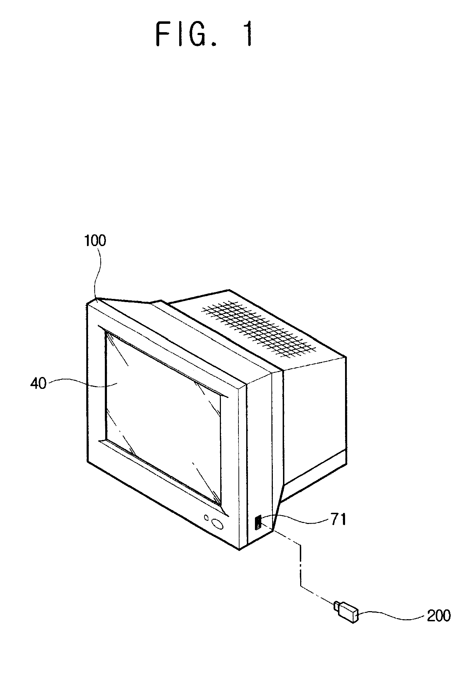

As shown in Figure 1, an electronic apparatus system according to the present invention may comprise an electronic apparatus 100 and a storage apparatus 200.

The electronic apparatus 100 may be embodied, for example, as a digital TV, a DVD player, a projector, an audio player, or even a combination thereof in an embedded system. A digital TV is shown in Figure 1 as an example of the electronic apparatus 100 according to the present invention.

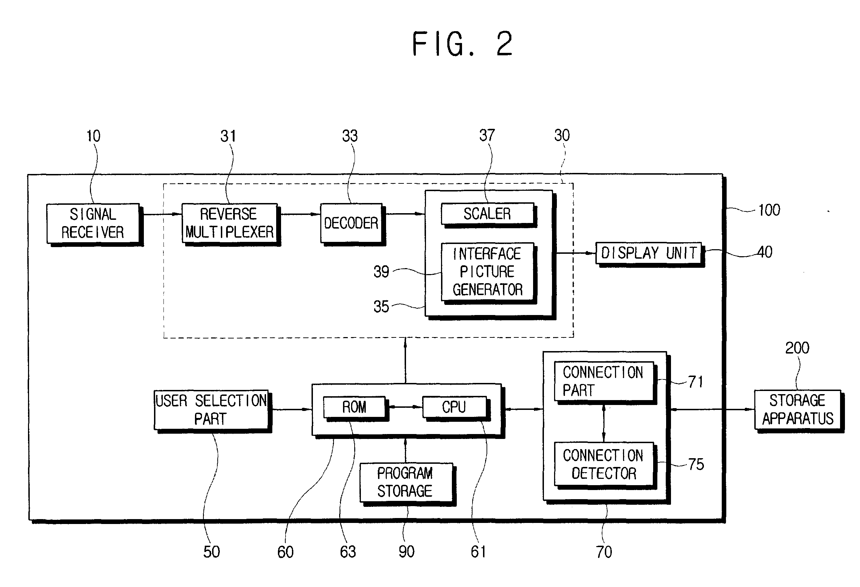

The storage apparatus 200 comprises a memory which stores a first application program and data therein. In Figure 2, a universal serial bus (USB) stick is shown as an example of the storage apparatus 200 according to the present invention.

The electronic apparatus 100 may comprise a USB port, i.e., a connection part 71 to which the USB stick 200 is connected.

As shown in Figure 2, the electronic apparatus system according to the present invention comprises the digital TV 100 and the USB stick 200.

The USB stick 200 may store an application program as well as data, including memory fields for storing the first application program and the data. Here, the first application program stored in the USB stick 200 comprises a compiled code corresponding to a controller 60 of the digital TV 100 (to be described later).

The digital TV 100 comprises a connection interface 70, a user selection part 50 which receives a predetermined selection signal, a program storage part 90, and the controller 60 which controls the foregoing elements.

As described above, if a TV is provided as the electronic apparatus 100 according to the present invention, it may further comprise a signal receiver 10 to receive a broadcasting signal, a signal processor 30 and a display unit 40.

The signal receiver 10 receives the broadcasting signal comprising video and audio signals and broadcasting data, through an antenna (not shown). The signal receiver 10 comprises a tuner (not shown) and a demodulator (not shown).

The tuner tunes the received broadcasting signal into a broadcasting signal corresponding to a channel selected through a tuning control signal of the controller 60 (to be described later). The demodulator demodulates and corrects the broadcasting signal of the predetermined channel which is tuned by the tuner, to output it as a transport stream.

The signal processor 30 processes the broadcasting signal received from the signal receiver 10 to output it to the display unit 40. The signal processor 30 comprises a reverse multiplexer 31, a decoder 33 and a signal processing part 35.

The reverse multiplexer 31 divides the broadcasting signal received from the signal receiver 10 into the video signal, the audio signal and the broadcasting data and outputs the signals and data to the decoder 33. Then, the decoder 33 decodes the video signal, the audio signal and the broadcasting data divided by the reverse multiplexer 31 and outputs the decoded signals and data to the signal processing part 35.

The signal processing part 35 processes the broadcasting signal, i.e., the video and audio signals and the broadcasting signal, decoded by the decoder 33 to output them to the display part 40. Here, the signal processing part 35 comprises a scaler 37 to convert the broadcasting signal into a vertical frequency, resolution, picture ratio, etc. which conform to output standards of the display part 40; and an interface picture generator 39 which generates a predetermined interface picture.

The display part 40 comprises a display module (not shown) to display an image thereon, and a module driver (not shown) to process the broadcasting signal input from the signal processor 30 and to display the image on the display module. Here, the display module according to the present invention may employ various display modules including, but no limited to, a digital light processing (DLP), a liquid crystal display (LCD) and a plasma display panel (PDP).

The connection interface 70 supplies data received from the USB stick 200 to the controller 60. The connection interface 70 comprises a connection part 71 to which the USB stick 200 is connected, and a connection detector 75 which detects whether the USB stick 200 is connected to the connection part 71.

The connection part 71 may comprise a terminal corresponding to various signal formats to receive signals in various formats. If the storage apparatus comprises the USB stick 200 as described above, the connection part 71 may comprise the USB port.

The connection detector 75 detects whether the USB stick 200 is connected to the connection part 71 to transmit a detection result to the controller 60 (to be described later).

Here, the user selection part 50 is provided to input or select a predetermined function by a user. The user selection part 70 may be embodied in various ways, for example, a plurality of input keys or buttons, a remote control, etc.

The controller 60 controls the respective parts and controls the display part 40 to display the broadcasting signal received through the signal receiver 10 thereon. Also, the controller 60 controls the first application program stored in the USB stick 200 to be executed when the USB stick 200 is connected to the connection part 71 at a booting stage. The controller 60 may comprise a CPU 61 and a ROM 63.

The CPU 61 controls respective elements of the electronic apparatus. The ROM 63 stores a boot loader and an operating system (OS) thereon. The ROM 63 may perform an interface function so that the first application program stored in the USB stick 200 is authorized to control the respective parts of the digital TV 100. Also, the ROM 63 stores a loading program therein to load the first application program and the OS stored in the USB stick 200 onto the program storage part 90.

The booting stage comprises a stage for receiving a booting signal, a stage for executing the boot loader, a stage for loading the OS selected by the boot loader, a stage for executing a loaded OS kernel, and a stage for executing a root file system.

When the OS is not loaded, i.e., when the detection signal informing the connection of the USB stick 200 is supplied through the connection detector 75 at the stage for executing the boot loader, the controller 60 loads the OS stored in the USB stick 200 based on the loading program. The controller 60 executes the OS kernel and the first application program which are stored in the USB stick 200. At this time, the controller 60 stores the OS, the OS kernel and the first application program stored in the USB stick 200, to the program storage part 90 and executes the stored first application program.

When the detection signal informing the connection of the USB stick 200 is supplied through the connection detector 75 after the OS is loaded, i.e., after the OS kernel is executed, the controller 60 loads the root file system based on the loading program, and accordingly executes the first application program.

The digital TV 100 may further comprise a memory(not shown) which stores a second application program therein for itself. The digital TV 100 according to the present invention may also not allow the second application program to be executed when the first application program stored in the USB stick 200 is executed, or may allow the first application program to be executed prior to the second application program.

If the controller 60 determines that the USB stick 200 is connected with the connection part 71, it controls the interface picture generator 39 to display a predetermined interface picture comprising information on the connection of the USB stick 200 on the display part 40. When the USB stick 200 is connected with the connection part 71, the controller 60 may control the interface picture generator 39 to include a selection menu for executing the first application program stored in the USB stick 200 or for executing the second application program in the digital TV 100, in the interface picture.

Thus, the controller 60 may change an execution path of the first application program to execute the first application program only when an execution of the first application program stored in the USB stick 200 is selected through the menu included in the interface picture.

When the USB stick 200 stores a moving picture file and the first application program therein to execute the moving picture file, the controller 60 loads the first application program and then executes the moving picture file based on the loaded first application program. At this time, the first application program may control a scaler 37 and the display part 40 alone to execute the moving picture file.

Here, the USB stick 200 may comprise various information other than the moving picture file and the first application program which executes the moving picture file.

In another exemplary embodiment of the present invention, the first application program may be stored in the USB stick 200 to check a debugging of the second application program stored in the digital TV 100 or errors of the respective parts. At this time, the controller 60 may store a checking result to the USB stick 200 after performing a checking operation through the execution of the first application program.

In another exemplary embodiment of the present invention, the USB stick 200 may store game data and the first application program therein to execute the game data, and accordingly, the digital TV 100 may perform as a game machine. Likewise, if the USB stick 200 stores a music file and the first application program therein to execute the music file, the digital TV 100 may perform as an audio player (ex. MP3 player)

In another exemplary embodiment of the present invention, the USB stick 200 may store the first application program therein to disable a button of the digital TV 100 and connect it with the digital TV 100, thereby prohibiting a user to use the digital TV 100 as a TV set in a public area such as a convention hall or a hotel.

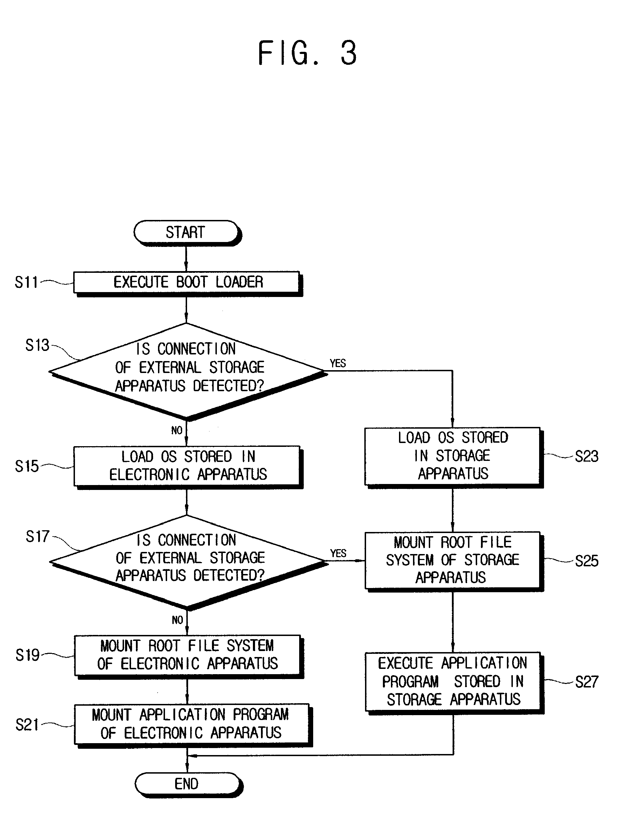

As shown in Figure 3, the digital TV 100 according to the present invention executes the boot loader when the booting is started, at operation S11.

After the execution of the boot loader, the connection detector 75 detects whether the external USB stick 200 is connected with the connection part 71 at operation S13. If the connection detector 75 determines that the external USB stick 200 is connected with the connection part 71, the controller 60 loads the OS stored in the USB stick 200 at operation S23. After the OS is loaded and the root file system stored in the USB stick 200 is mounted at operation S25, the first application program stored in the USB stick 200 is executed at operation S27. The controller 60 may respectively execute the OS, the root file system and the first application program after storing them in the program storage part 90 to improve execution speed.

After the boot loader is executed, if the connection detector 75 determines that the external USB stick 200 is not connected with the connection part 71 at operation S13, the controller 60 loads the OS stored in the Rom 63 of the digital TV 100 at operation S15. After the OS is loaded, the connection detector 75 detects whether the external USB stick 200 is connected with the connection part 71 at operation S17. If the connection detector 75 determines that the external USB stick 200 is connected with the connection part 71, the controller 60 mounts the root file system in the USB stick 200 at operation S25, and executes the first application program stored in the USB stick 200 at operation S27.

After the OS is loaded, if it is determined by the connection detector 75 that the external USB stick 200 is not connected with the connection part 71 at operation S17, the controller 60 mounts the root file system of the digital TV 100 at operation S19, and executes the first application program of the digital TV 100 at operation S21.

Meanwhile, if the controller 60 determines that the USB stick 200 is connected with the connection part 71 at the foregoing stages, it may control the interface picture generator 39 to generate the interface picture comprising information on the connection of the USB stick 200. Also, the controller 60 may control the interface picture generator 39 so that the interface picture further comprises a menu for selecting whether to execute the first application program stored in the USB stick 200.

As described above, the electronic apparatus 100 according to the present invention may operate through the first application program and the data stored in the USB stick 200 alone, and may use minimum programs including the OS and the boot loader among the programs stored in the electronic apparatus 100. As also described, in an exemplary embodiment, the first application program according to the present invention comprises a program to drive internal elements of the electronic apparatus 100, i.e., the scaler 37 and the display part 40. The electronic apparatus 100 according to the present invention may be programmed not to use an application programming interface (API) which is stored therein.

As described above, the electronic apparatus 100 according to the present invention executes the first application program stored in the storage apparatus 200, thereby executing various first application programs and the data and ensuring convenience for a user.

Although exemplary embodiments of the present invention have been shown and described, it will be appreciated by those skilled in the art that changes may be made in these exemplary embodiments without departing from the scope of the inventions as defined in the appended claims.

## Claims

1. An electronic apparatus, comprising:
a connection part (71) which is connectable to an external storage apparatus (200); a connection detector (75) configured to detect whether the storage apparatus (200) is connected to the connection part (71); and
a controller (60) configured to execute a first application program stored in the external storage apparatus (200) if the connection detector (75) detects that the external storage apparatus (200) is connected with the connection part (71) at a booting stage.

2. The electronic apparatus according to claim 1, wherein the controller (60) is configured to execute the first application program stored in the storage apparatus (200) if the controller (60) determines that the external storage apparatus (200) is connected with the connection part (71) based on a detection result of the connection detector (75) at the booting stage.

3. The electronic apparatus according to claim 1 or 2, further comprising a program storage part (90), wherein
the controller (60) is configured to execute the first application program stored in the external storage apparatus (200) after loading the first application program into the program storage part (90).

4. The electronic apparatus according to any one of the preceding claims, wherein the controller (60) is configured to control an operating system (OS) stored in the external storage apparatus (200), and the OS is loaded if a connection of the storage apparatus (200) is detected.

5. The electronic apparatus according to claim 4, wherein the OS stored in the storage apparatus (200) is loaded if the connection of the storage apparatus (200) is detected at a loading stage of a boot loader.

6. The electronic apparatus according to claim 5, wherein the controller (60) is configured to control a root file system stored in the storage apparatus (200), and the root file system is loaded if the connection of the storage apparatus (200) is detected after the OS is loaded at the booting stage.

7. The electronic apparatus according to any one of the preceding claims, further comprising an internal memory which stores a second application program, wherein the controller (60) is configured to control the first application program to be executed prior to the second application program if the first application program stored in the storage apparatus is executed.

8. The electronic apparatus according to any one of the preceding claims, further comprising:
a display part (40); and
an interface picture generator (39) that generates a predetermined interface picture, wherein
the controller (60) is configured to control the interface picture generator (39) to display the predetermined interface picture, the predetermined interface picture comprising information on the connection of the storage apparatus (200), on the display part (40) if the storage apparatus (200) is connected with the connection part (71).

9. The electronic apparatus according to any one of the preceding claims, further comprising a user selection part (50), wherein
the controller (60) is configured to determine whether to execute the first application program stored in the storage apparatus (200) according to a selection signal of the user selection part (50) if the storage apparatus (200) is connected with the connection part (71).

10. The electronic apparatus according to claim 9, wherein the first application program comprises a checking program, and
the controller (60) is configured to execute the checking program.

11. The electronic apparatus according to claim 10, wherein the checking program stores a checking result in the storage apparatus after performing a checking operation.

12. An electronic apparatus system, comprising:
an electronic apparatus according to any one of the preceding claims, and an external storage apparatus that stores at least a first application program therein.

13. A method of controlling an electronic apparatus, comprising:
detecting whether a storage apparatus (200) is connected to the electronic apparatus; and
executing a first application program stored in the storage apparatus (200) if it is detected that the storage apparatus (200) is connected to the electronic apparatus at a booting stage.

14. The method according to claim 13, wherein the executing the first application program comprises:
loading the first application program stored in the storage apparatus (200); and
executing the loaded first application program.

15. The method according to claim 13 or 14, wherein the executing the first application program further comprises loading an operation system (OS) stored in the storage apparatus (200) when a connection of the storage apparatus (200) is detected.

16. The method according to claim 15, wherein the executing the first application program further comprises loading a root file system stored in the storage apparatus (200) if the connection of the storage apparatus (200) is detected after the OS is loaded at the booting stage.

17. The method according to any one of claims 13 to 16, wherein the executing the first application program further comprises executing the first application program prior to a second application program stored in an internal memory of the electronic apparatus.

18. The method according to any one of claims 13 to 17, further comprising displaying information on the connection of the storage apparatus(200) when the storage apparatus (200) is connected.

19. The method according toany one of claims 13 to 18, wherein the executing the first application program further comprises determining whether to execute the first application program stored in the storage apparatus (200) according to a predetermined user selection signal if the storage apparatus (200) is connected.
